# EUROPEAN PATENT SPECIFICATION

(11) **EP 0 733 826 B1**
(45) Date of publication and mention of the grant of the patent: **20.12.2000**
(21) Application number: 96103665.4
(22) Date of filing: 08.03.1996
(51) Int. Cl.: F16H 3/66

(54) **Automatic transmission for vehicle**
Automatisches Getriebe für Fahrzeuge
Transmission automatique pour véhicules

(30) Priority: 24.03.1995 JP 9014495
(43) Date of publication of application: 25.09.1996
(73) Proprietor: AISIN AW CO., LTD., Anjo-shi Aichi-ken (JP)
(72) Inventor: Moroto, Shuzo, Nagoya-shi, Aichi-ken, 458 (JP); Taniguchi, Takao, Okazaki-shi, Aichi-ken, 444-21 (JP); Miyagawa, Shoichi, Okazaki-shi, Aichi-ken, 444-31 (JP); Tsukamoto, Kazumasa, Toyota-shi, Aichi-ken, 471 (JP); Hayabuchi, Masahiro, Anjo-shi, Aichi-ken, 446 (JP); Nishida, Masaaki, Anjo-shi, Aichi-ken, 446 (JP); Kasuya, Satoru, Hekinan-shi, Aichi-ken, 447 (JP); Kato, Akitoshi, Takanama-shi, Aichi-ken, 444-13 (JP); Sugiura, Nobutada, Nishio-shi, Aichi-ken, 445 (JP)
(74) Representative: VOSSIUS & PARTNER

(56) References cited:
- GB-A- 2 103 736
- US-A- 3 209 618
- US-A- 5 046 999

## Description

This invention relates to an automatic transmission for a vehicle, and particularly to a 5-speed automatic transmission having improved transmission efficiency in top gear.

Generally, to improve vehicle acceleration performance in low gears and fuel consumption in high gears, it is desirable that the overall gear ratio range of a transmission be wide (however, because the output of a transmission is further decreased in speed by a differential unit or the like, the gear ratios themselves of the lowest and highest gears do not directly constitute that much of a problem in so far as they relate to acceleration performance and fuel consumption). However, when for example a 4-speed transmission is given a wide overall gear ratio range, the steps between the gear ratios of adjacent gears become large, and because the speed range which must be covered by each gear consequently is wide, acceleration performance is reduced, and because the gear ratio changes greatly on gear changes, output torque fluctuations are large and cause gear-change shock. For this reason, when the overall gear ratio range is to be made large, it is necessary to add another forward gear and make the transmission a 5-speed transmission having five forward gears.

In a conventional 5-speed transmissions, as disclosed in JP-A-H.4-341650 (hereinafter called Conventional Technology 1), a speed changer uses three planetary gear sets, first to third speeds are underdrive gears which decrease in speed rotation of an input shaft, a fourth speed is a direct-coupled gear which integrally rotates the planetary gear sets and outputs rotation of the input shaft unchanged, and a fifth speed is an overdrive gear which increases in speed rotation of the input shaft. Also, in case of JP-A-H.4-302748 (hereinafter called Conventional Technology 2), to a main transmission comprising two planetary gear sets and achieving 4-speeds is added an auxiliary transmission which can be changed over from an underdrive state to a directly coupled state when the main transmission is in a directly coupled state, and, in the same way as in the Conventional Technology 1, first to third speeds are underdrive gears, a fourth speed is a direct-coupled gear and a fifth speed is an overdrive gear.

These Conventional Technologies 1 and 2 have three underdrive gears, but when the direct-coupled gear (gear ratio 1.0) is made a reference, in addition to it being necessary to provide three gears having high gear ratios on the underdrive side of the direct-coupled gear there is the problem that because in a gear-changing mechanism it is usual for the steps of the gear ratios to become smaller from the low gears to the high gears, on the low gear side the gear ratio steps are large, and the gear ratio in the first speed, which is the lowest gear, is quite large. The gear ratio being large raises the problem that a frictional engagement element which brakes a reaction element for achieving the first speed must also be large; also, because when the gear ratio of the first speed is high the output torque is high, the power transmission members also must be large, and this results in the whole automatic transmission being large.

This kind of problem can conceivably be solved by reducing the number of underdrive gears and thereby avoiding increase in size of the transmission associated with the provision of large gear ratios on the low gear side while keeping the gear ratio range wide by increasing the number of overdrive gears correspondingly, but there are problems associated with shifting gears to the overdrive side also. That is, whereas the gear ratio at the output shaft of a vehicle must basically be substantially the same gear ratio, when many gears are overdrive gears it becomes necessary to greatly reduce the speed with a differential unit or the like, and this causes increase in the size of that unit and as a result the automatic transmission becomes large.

One way of overcoming this problem is to make the first and second speeds underdrive gears and make the fourth and fifth speeds overdrive gears, as in technology disclosed in Japanese Unexamined Patent Publication No. S.59-117943 (hereinafter called Conventional Technology 3) and technology disclosed in U.S. Patent Specification No. 5,261,862 (hereinafter called Conventional Technology 4 and disclosing all features of the preamble of claim 1), and this is a well-balanced solution to the above-mentioned problem and helps to make the automatic transmission compact.

However, the above-mentioned Conventional Technologies 3 and 4 have the shortcoming that the gear efficiency, which has a large affect on the fuel consumption in top gear, improvement of which is the original purpose of using a 5-speed transmission, is poor. That is, in Conventional Technology 3, the highest gear is achieved by further adding to an overdrive gear of a main transmission an overdrive gear of an auxiliary transmission, and when this happens two planetary gear sets become meshed with each other (in each planetary gear set meshing occurs at two locations, namely between a sun gear and a carrier and between a carrier and a ring gear, making four locations in total), and this results in decrease of the gear efficiency. Also, in Conventional Technology 4, the highest gear is achieved by causing reverse rotation of a sun gear by means of a planetary gear set provided between a sun gear and a case constituting reaction elements of a planetary gear set for achieving an overdrive gear in the fourth speed, and in this case also, as in Conventional Technology 3, in top gear two planetary gear sets become meshed and this similarly results in decrease of the gear efficiency.

This invention was devised to solve this kind of problem associated with the conventional technology, and an object of the invention is to provide a compact 5-speed automatic transmission for a vehicle with which it is possible to achieve a highly efficient top gear while providing a wide overall gear ratio range with a compact construction by means of two underdrive gears, a direct-coupled gear and two overdrive gears.

To achieve the above-mentioned object and other objects, the invention provides an automatic transmission for a vehicle having an input shaft, an output shaft and a speed changer for achieving five forward gears comprising first and second speeds which decrease in speed and transmit to the output shaft rotation from the input shaft, a third speed which outputs rotation from the input shaft unchanged to the output shaft, and fourth and fifth speeds which accelerate and transmit to the output shaft rotation from the input shaft, wherein: the speed changer has connected first, second and third planetary gear sets, a plurality of clutches for connecting the input shaft to predetermined speed change elements of the first, second and third planetary gear sets, and a plurality of brakes for stopping predetermined speed change elements of the first, second and third planetary gear sets; the first planetary gear set has, as speed change elements, a first ring gear drive-connected to the output shaft, a first carrier rotatably supporting a first pinion gear meshing with the first ring gear, and a first sun gear meshing with the first pinion gear; the second planetary gear set has, as speed change elements, a second carrier drive-connected to the first carrier and rotatably supporting a second pinion gear having a smaller diameter than the first pinion gear and connected to the first pinion gear non-rotatably relative thereto, and a second sun gear meshing with the second pinion gear; the plurality of clutches includes a first clutch for selectively drive-connecting the first carrier to the input shaft; and the plurality of brakes includes a first brake for selectively stopping the first sun gear and a second brake for selectively stopping the second sun gear.

In an automatic transmission for a vehicle according to a specific aspect of the invention, the third planetary gear set has, as speed change elements, a second ring gear drive-connected to the first carrier, a third carrier drive-connected to the first ring gear and rotatably supporting a third pinion gear meshing with the second ring gear, and a third sun gear meshing with the third pinion gear; the plurality of clutches includes a second clutch for selectively drive-connecting the first sun gear to the input shaft; and the plurality of brakes includes a third brake for selectively stopping the third sun gear.

In an automatic transmission for a vehicle according to another specific aspect of the invention, the third planetary gear set has, as speed change elements, a second ring gear drive-connected to the first carrier, a third carrier drive-connected to the first ring gear and rotatably supporting a third pinion gear meshing with the second ring gear, and a third sun gear meshing with the third pinion gear; the plurality of clutches includes a second clutch for selectively drive-connecting the third sun gear to the input shaft; and the plurality of brakes includes a third brake for selectively stopping the second ring gear.

In an automatic transmission for a vehicle according to another specific aspect of the invention, the third planetary gear set has, as speed change elements, a second ring gear formed integrally with the first ring gear, a third carrier connected to the first carrier and rotatably supporting a third pinion gear connected to the first pinion gear non-rotatably relative thereto and meshing with the second ring gear and a fourth pinion gear meshing with the third pinion gear, and a third sun gear meshing with the fourth pinion gear; the plurality of clutches includes a second clutch for selectively drive-connecting the first sun gear to the input shaft; and the plurality of brakes includes a third brake for selectively stopping the third sun gear.

In an automatic transmission for a vehicle according to a further specific aspect of the invention, the third planetary gear set has, as speed change elements, a second ring gear formed integrally with the first ring gear, a third carrier connected to the first carrier and rotatably supporting a third pinion gear connected to the first pinion gear non-rotatably relative thereto and meshing with the second ring gear and a fourth pinion gear meshing with the third pinion gear, and a third sun gear meshing with the fourth pinion gear; the plurality of clutches includes a second clutch for selectively drive-connecting the first sun gear to the input shaft; and the plurality of brakes includes a third brake for selectively stopping the third sun gear.

Any of the above-mentioned automatic transmissions according to the invention may have a construction wherein the input shaft is disposed coaxially with an engine and drive-connected to the engine, the first, second and third planetary gear sets are disposed in the order of from the engine side the third, the first and the second planetary gear set, and an output gear which outputs rotation to the vehicle wheels side is provided on the output shaft between the engine and the third planetary gear set.

Because the automatic transmissions described above are all made up of first and second speeds which decrease in speed and transmit to the output shaft rotation from the input shaft, a third speed which outputs rotation from the input shaft unchanged to the output shaft, and fourth and fifth speeds which accelerate and transmit to the output shaft rotation from the input shaft, as described above in connection with the conventional technology it is possible to make the whole transmission a compact one.

Whereas in the fourth speed the input shaft is connected to the first carrier of the first planetary gear set by the first clutch, the first sun gear is stopped by the first brake and rotation increased in speed from the first ring gear is outputted to the output shaft, in the fifth speed, although the input shaft is connected to the second carrier by way of the first carrier in the same way as in the fourth speed, instead of the first brake the second brake engages, and the second sun gear is stopped. When this happens, because the second pinion gear is of smaller diameter than the first pinion gear, the rotation of the input shaft is increased in speed more than in the fourth gear before being outputted from the first ring gear. At this time, meshing occurs at two locations, namely between the second sun gear and the second pinion gear and between the first pinion gear and ring gear; in this way, top gear is achieved with only one planetary gear set's worth of meshing and with no fall in efficiency.

Also, because in the second planetary gear set the second pinion gear is connected to the first pinion gear non-rotatably relative thereto, there is no need to provide a ring gear in the second planetary gear set and consequently the automatic transmission can be given a compact construction.

It is necessary to make the diameter of the sun gear of the planetary gear set for the fifth speed large in order to make the gear ratio smaller than that of the planetary gear set for the fourth speed, but when the diameter of the ring gear of the planetary gear set for the fifth speed is the same as that of the planetary gear set for the fourth speed, the diameter of the pinion gear of the planetary gear set for the fifth speed is then too small for that pinion gear to be made. For this reason, it is necessary to make the diameter of the ring gear of the planetary gear set for the fifth speed large, and the external diameter of the transmission consequently becomes large. However, in the case of this invention, as a result of a second pinion gear of smaller diameter than the first pinion gear being connected to the first pinion gear non-rotatably relative thereto and the first and second carriers which support the first and second pinion gears being connected, it is less necessary to make the diameter of the sun gear of the planetary gear set for the fifth gear large and consequently the pinion gear of the planetary gear set for the fifth gear can be made easily and the external diameter of the transmission can be prevented from becoming large.

In particular, in an automatic transmission for a vehicle according to one of the specific aspects of the invention, because the second planetary gear set, seen from the engine side, is disposed sandwiching a counter gear, the third planetary gear set and the first planetary gear set, it is possible to remove the second planetary gear set with minimal affect on the counter gear, the third planetary gear set and the first planetary gear set, which are the principal components of a 4 forward speed transmission, and by doing this it is possible to easily convert a 5-speed transmission according to the invention into 4-speed transmission. As a result, commonization of parts and common use of a transmission manufacturing line become possible, and reductions in production costs can be achieved.
Fig. 1 is a skeleton diagram showing the overall construction of an automatic transmission for a vehicle according to a first preferred embodiment of the invention;
Fig. 2 is an operation table of the transmission shown in Fig. 1;
Fig. 3 is a skeleton diagram showing the overall construction of an automatic transmission for a vehicle according to a second preferred embodiment of the invention;
Fig. 4 is an operation table of the transmission shown in Fig. 3;
Fig. 5 is a skeleton diagram showing the overall construction of an automatic transmission for a vehicle according to a third preferred embodiment of the invention;
Fig. 6 is an operation table of the transmission shown in Fig. 5;
Fig. 7 is a skeleton diagram showing the overall construction of an automatic transmission for a vehicle according to a fourth preferred embodiment of the invention;
Fig. 8 is an operation table of the transmission shown in Fig. 7;
Figs. 9(A) and 9(B) are skeleton diagrams of conventional speed-changers; and
Fig. 10 is a skeleton diagram of a characteristic part of a speed changer construction according to the invention.

Preferred embodiments of the invention will now be described with reference to the accompanying drawings. The four preferred embodiments described below all have in common the point that they have as a base a 4-speed gear train having an overdrive in the fourth speed (4TH) effected with carrier input, sun gear reaction and ring gear output and this has been made a 5-speed automatic transmission by making an overdrive pinion gear of a planetary gear set for achieving this fourth speed an integral stepped pinion gear.

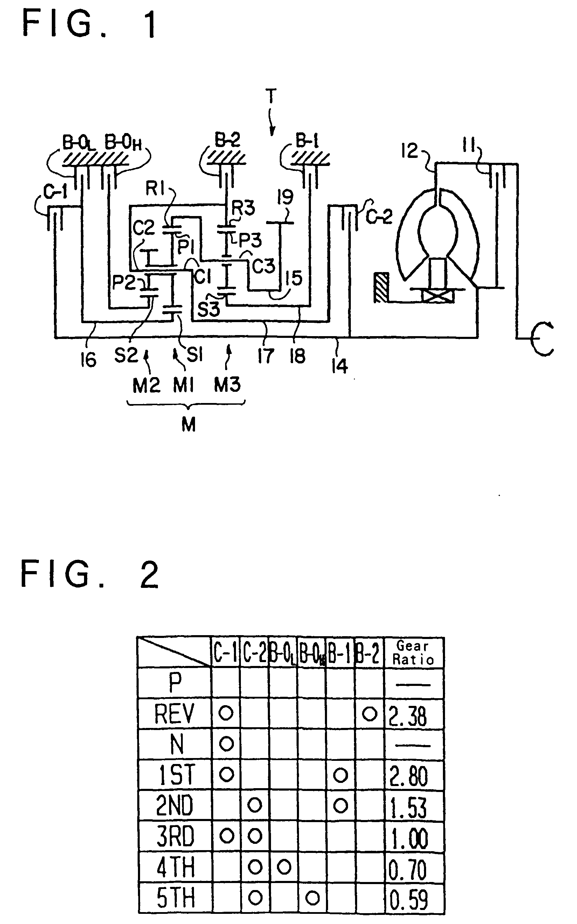

Fig. 1 is a skeleton diagram of a first preferred embodiment of the invention wherein the above-mentioned 4-speed gear train is one made by connecting the carriers and ring gears of two planetary gear sets and a transmission made by providing this 4-speed gear train with two clutches and three brakes is made 5-speed using means provided by the invention. This automatic transmission for a vehicle T has an input shaft 14, an output shaft 15 and a speed changer M which achieves five speeds and comprises first and second speeds (1ST, 2ND) which decrease in speed and transmit to the output shaft 15 rotation from the input shaft 14, a third speed (3RD) which outputs rotation from the input shaft 14 unchanged to the output shaft 15 and fourth and fifth speeds (4TH, 5TH) which accelerate and transmit to the output shaft 15 rotation from the input shaft 14.

The speed changer M has connected first, second and third planetary gear sets M1, M2 and M3, a plurality of clutches for connecting the input shaft 14 and predetermined speed change elements of the first, second and third planetary gear sets M1, M2, M3, and a plurality of brakes for stopping predetermined speed change elements of the first, second and third planetary gear sets M1, M2, M3.

The first planetary gear set M1 has, as speed change elements, a first ring gear R1 drive-connected to the output shaft 15, a first carrier C1 rotatably supporting a first pinion gear P1 meshing with the first ring gear R1, and a first sun gear S1 meshing with the first pinion gear P1.

The second planetary gear set M2 has, as speed change elements, a second carrier C2 drive-connected to the first carrier C1 and rotatably supporting a second pinion gear P2 having a smaller diameter than the first pinion gear P1 and connected to the first pinion gear P1 non-rotatably relative thereto, and a second sun gear S2 meshing with the second pinion gear P2.

In this first preferred embodiment, the third planetary gear set M3 has, as speed change elements, a second ring gear R3 drive-connected to the first carrier C1, a third carrier C3 drive-connected to the first ring gear R1 and rotatably supporting a third pinion gear P3 meshing with the second ring gear R3, and a third sun gear S3 meshing with the third pinion gear P3.

The plurality of clutches is made up of a first clutch (C-2) for selectively drive-connecting the first carrier C1 to the input shaft 14 and a second clutch (C-1) for selectively drive-connecting the first sun gear S1 to the input shaft 14.

The plurality of brakes is made up of a first brake (B-0_{L}) for selectively stopping the first sun gear S1, a second brake (B-0_{H}) for selectively stopping the second sun gear S2 and a third brake (B-1) for selectively stopping the third sun gear S3. Besides these, a brake (B-2) for braking the carrier C1 is also provided, but this is a brake for achieving reverse gear and is not directly related to the forward gears which pertain to the main subject of this invention.

The input shaft 14 is disposed coaxially with an engine of a vehicle not shown in the drawings and is driven by the engine by way of a torque convertor 12 having a lockup clutch 11; the first, second and third planetary gear sets M1, M2 and M3 are disposed in the order of from the engine side the third, the first and the second planetary gear sets M3, M1, M2, and an output gear 19 for outputting rotation to the vehicle wheels side is provided on the output shaft 15 between the engine and the third planetary gear set M3, whereby a transverse-type automatic transmission for a vehicle is constituted. In Fig. 1, reference number 16 denotes a sun gear shaft connecting the clutch (C-1) and the sun gear S1; 17 a carrier shaft connecting the clutch (C-2) and the carrier C1; and 18 a sun gear shaft connecting the sun gear S3 and the brake (B-1).

This transmission achieves gears by supplying hydraulic pressure to hydraulic servos for actuating the various clutches and brakes as shown in Fig. 2 under control of a hydraulic control unit not shown in the drawings and thereby causing the clutches and brakes to engage (shown with a ○ sign in Fig. 2) and release (shown with no sign in Fig. 2). Specifically, the first speed (1ST) is achieved when the clutch (C-1) and the brake (B-1) are engaged. At this time, rotation of the input shaft 14 is transmitted to the first sun gear S1 via the clutch (C-1) and is outputted to the output gear 19 as rotation of the carrier C3 most decreased in speed by the braking of the sun gear S3 by the engagement of the brake (B-1). The second speed (2ND) is achieved by engagement of the clutch (C-2) and the brake (B-1). At this time, rotation having been transmitted to the carrier shaft 17 via the clutch (C-2) is transmitted to the second ring gear R3 unchanged via the carrier C1 and the carrier C2 and is outputted to the output gear 19 as differential rotation of the carrier C3 having as a reaction element the sun gear S3 braked by the engagement of the brake (B-1). The third speed (3RD) is achieved by direct coupling of the first planetary gear set M1 by engagement of both of the clutches (C-1, C-2). At this time, rotation of the input shaft 14 is outputted to the output gear 19 unchanged as rotation of the carrier C3.

The overdrive fourth speed (4TH) is achieved by engagement of the clutch (C-2) and engagement of the brake (B-0_{L}) which brakes the sun gear S1. At this time, rotation of the input shaft 14 is transmitted to the output gear 19 from the carrier C3 as rotation of the ring gear R1 having been increased in speed with respect to rotation of the carrier C1 by an amount corresponding to autorotation of the first pinion gear P1. Top gear, i.e. the fifth speed, which pertains to the main subject of this invention, is achieved by engagement of the clutch (C-2) and engagement of the brake (B-0_{H}), whereupon rotation of the input shaft 14 is transmitted to the output gear 19 from the carrier C3 as rotation of the first ring gear R1 having been further increased in speed with respect to rotation of the carrier C1 by an amount corresponding to autorotation of the small-diameter pinion gear P2 taking a reaction from the sun gear S2, which is of larger diameter than the first sun gear S1 used to achieve the fourth speed. At this time, meshing occurs in two locations, namely between the second sun gear S2 and the pinion gear P2 and between the pinion gear P1 and the ring gear R1, and top gear is achieved with only one planetary gear set's worth of meshing and therefore with no fall in efficiency.

Reverse gear (REV) is achieved by engagement of the clutch (C-1) and the brake (B-2), and at this time rotation of the ring gear R1 rotating in reverse and decreased in speed with respect to the input of the sun gear S1 by the braking of the first carrier C1 is outputted from the output gear 19 via the third carrier C3.

Because a transmission of the construction described above has five speeds made up of first and second speeds which decrease in speed and transmit to the output shaft 15 rotation from the input shaft 14, a third speed which outputs rotation from the input shaft 14 unchanged to the output shaft 15, and fourth and fifth speeds which accelerate and transmit to the output shaft 15 rotation from the input shaft 14, it is possible to make the whole transmission compact while obtaining the wide gear ratio range shown in Fig. 2. Also, because the second planetary gear set M2 is of a construction wherein a second pinion gear P2 is connected to the first pinion gear P1 non-rotatably relative thereto, it is not necessary to provide a ring gear in the second planetary gear set M2 and in this respect also the automatic transmission for a vehicle T can be made compact.

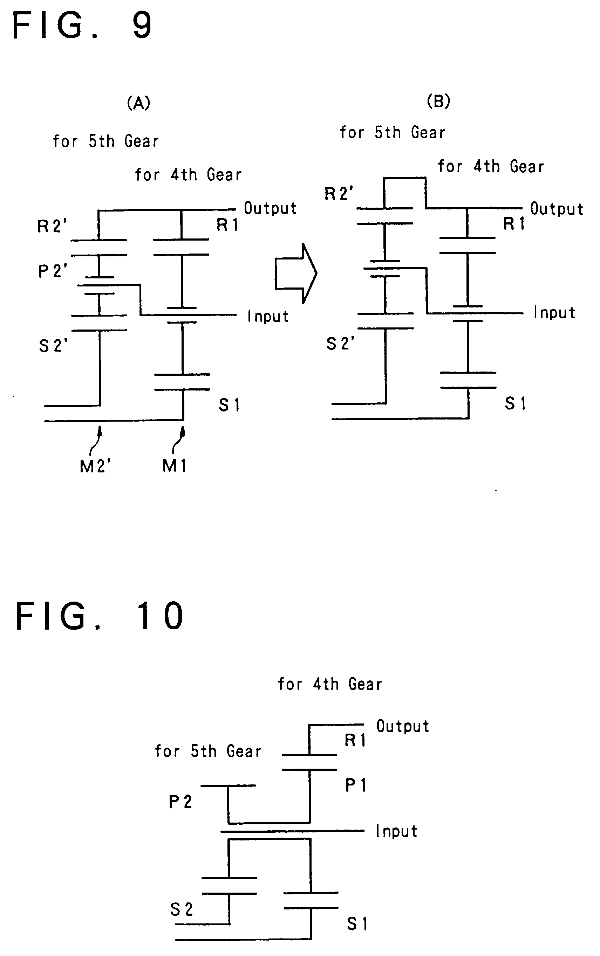

Furthermore, for example compared to a case wherein to achieve an efficient fifth speed a second planetary gear set M2' for the fifth speed is constructed similarly to the first planetary gear set M1 for the fourth speed, as shown in Figs. 9(A) and 9(B), this first preferred embodiment makes it possible to construct the automatic transmission for a vehicle more compactly. That is, it is necessary for the gear ratio of the second planetary gear set M2' for the fifth speed to be smaller than that of the first planetary gear set M1 for the fourth speed, and in the cases of the gear constructions shown in Figs. 9(A) and 9(B), the gear ratio of the fifth speed, when the number of teeth of the sun gear S2' is written Z_{S2} and the number of teeth of the ring gear R2' is written Z_{R2}, is 1/(1+Z_{S2}/Z_{R2}) , and it is necessary to make the number of teeth (which generally is proportional to the gear diameter) of the sun gear S2' large; however, when the diameter of the ring gear R2', as shown in (A) of the drawing, is the same as the diameter of the ring gear R1 of the fourth speed, the diameter of the pinion gear P2' becomes too small for it to be practically usable. For this reason, the diameter of the ring gear R2' must be made large, but when this is done, as shown in (B) of the drawing, the external diameter of the transmission becomes large. In the case of this preferred embodiment, on the other hand, because the gear construction shown in Fig. 10 is employed, the fifth speed gear ratio, when the number of teeth of the sun gear S2 is written Z_{S2}, the number of teeth of the ring gear R1 is written Z_{R1}, the number of teeth of the pinion gear P1 is written Z_{P1} and the number of teeth of the pinion gear P2 is written Z_{P2}, is 1/(1+Z_{P1}/Z_{P2}•Z_{S2}/Z_{R1}) , and because it is therefore less necessary to make the diameter of the sun gear S2 large than in the cases shown in Figs. 9(A) and 9(B), it is easy for the pinion gear P2 to be given a diameter sufficient for it to be practically usable and the external diameter of the transmission can be prevented from becoming large.

Also, supposing that, reversely, a 4-speed gear-changing mechanism is to be made out of the 5-speed gear-changing mechanism of this preferred embodiment, as is clear from to Fig. 1 this can be done by removing the second planetary gear set M2 and the second brake (B-0_{H}). In this preferred embodiment, the second planetary gear set M2, seen from the engine side, is disposed sandwiching the output gear 19, the third planetary gear set M3 and the first planetary gear set M1, and consequently, with minimal affect (i.e. changes of positions and the like) on the output gear 19, the third planetary gear set M3 and the first planetary gear set M1, which are the principal components of a 4-speed transmission, it is possible to make a 4-speed transmission easily by removing the second planetary gear set M2. Making use of this positional relationship of the second planetary gear set M2 to the rest of the components constituting the 5-speed transmission of this preferred embodiment, commonization of parts with a 4-speed transmission and common use of a transmission manufacturing line and the like become possible, and it is possible to achieve reductions in production costs.

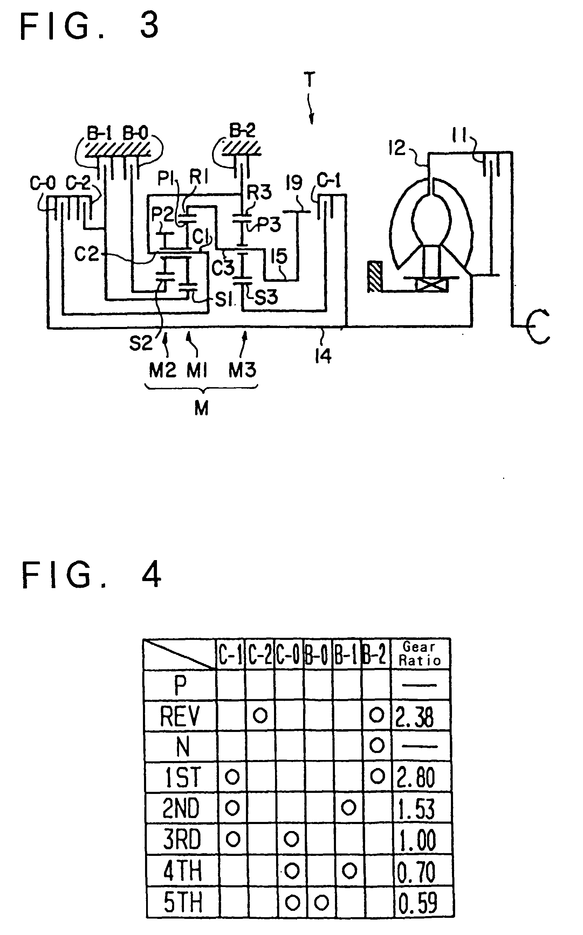

Fig. 3 is a skeleton diagram of a second preferred embodiment of the invention. This preferred embodiment is one wherein a 5-speed transmission is made by adding a stepped pinion gear to a 4-speed transmission comprising a gear train the same as that of the first preferred embodiment but provided, differently from in the first preferred embodiment, with three clutches and two brakes.

Here, to avoid lengthiness, only the points of difference between the second preferred embodiment and the first preferred embodiment described above will be described. In this second preferred embodiment, the plurality of clutches is made up of a first clutch (C-0) for selectively drive-connecting the first carrier C1 to the input shaft 14 and a second clutch (C-1) for selectively drive-connecting the third sun gear S3 to the input shaft 14, and besides these a clutch (C-2) only for achieving reverse gear (REV) is also provided.

The plurality of brakes is made up of a first brake (B-1) for selectively stopping the first sun gear S1, a second brake (B-0) for selectively stopping the second sun gear S2 and a third brake (B-2) for selectively stopping the second ring gear R3.

The relationships between the engagement and the release of the clutches and the brakes and the achieved gears when this construction is employed are as shown in the operation table of Fig. 4. That is, the first speed (1ST) is achieved by engagement of the clutch (C-1) and the brake (B-2), whereupon rotation of the input shaft 14 is transmitted to the sun gear S3 via the clutch (C-1) and outputted as rotation of the carrier C3 most decreased in speed by braking of the ring gear R3 by the engagement of the brake (B-2). The second speed (2ND) is achieved by engagement of the clutch (C-1) and the brake (B-1), and, with respect to input from the clutch (C-1) to the sun gear S3, rotation of the carrier C3 having as a reaction element the sun gear S1 braked by the engagement of the brake (B-1) is outputted. The third speed (3RD) is achieved by direct coupling of the third planetary gear set M3 by engagement of both of the clutches (C-0, C-1), whereupon rotation of the input shaft 14 is outputted unchanged to the output gear 19 as rotation of the carrier C3.

The overdrive fourth speed (4TH) is achieved by engagement of the clutch (C-0) and engagement of the brake (B-1) which brakes the sun gear S1, whereupon rotation of the input shaft 14 is outputted from the carrier C3 as rotation of the ring gear R1 increased in speed with respect to rotation of the carrier C1 by an amount corresponding to autorotation of the pinion gear P1. Top gear, i.e. the fifth speed (5TH), which pertains to the main subject of this invention, is achieved by engagement of the clutch (C-0) and engagement of the brake (B-0), whereupon rotation of the input shaft 14 is outputted from the carrier C3 as rotation of the ring gear R1 further increased in speed with respect to rotation of the carrier C1 by an amount corresponding to autorotation of the small-diameter pinion gear P2 taking a reaction from the sun gear S2, which is of larger diameter than the first sun gear S1 used to achieve the fourth speed. At this time also, as in the previous example, meshing occurs in two locations, namely between the second sun gear S2 and the pinion gear P2 and between the pinion gear P1 and the ring gear R1, top gear is achieved with only one planetary gear set's worth of meshing and there is no fall in efficiency. The reverse gear (REV) in this example is achieved by engagement of the clutch (C-2) and the brake (B-2), whereupon rotation of the ring gear R1 rotating in reverse and decreased in speed with respect to the input of the sun gear S1 as a result of the braking of the carrier C1 is outputted from the output gear 19 via the carrier C3. In this way, in this example also, the same effects as in the case of the first preferred embodiment are obtained.

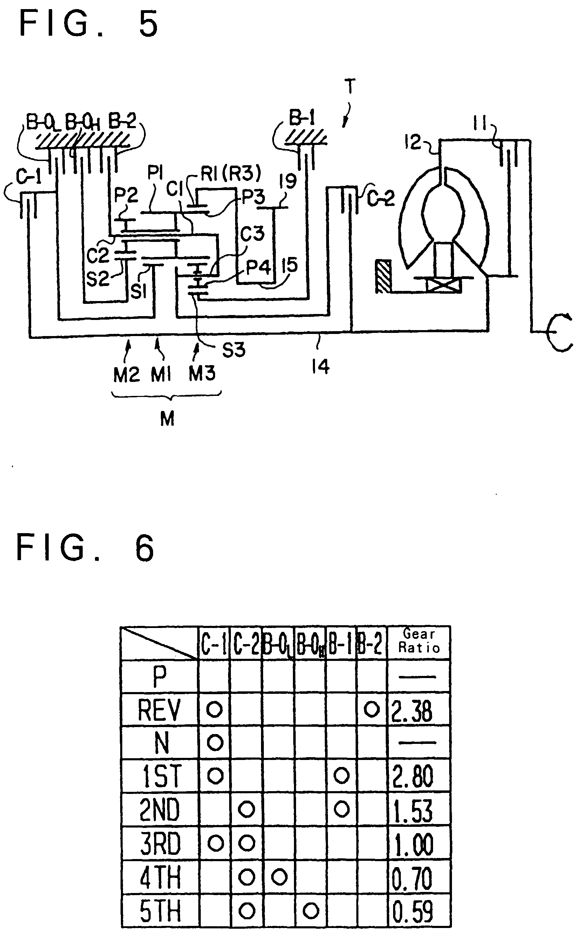

Next, Fig. 5 is a skeleton diagram of a third preferred embodiment of the invention. This example is one wherein a 5-speed transmission is made by adding a stepped pinion gear to a 4-speed transmission comprising a Ravigneaux type gear train, unlike the gear trains of the first and second preferred embodiments, with two clutches and three brakes in the same way as in the first preferred embodiment.

In this preferred embodiment also, to avoid lengthiness, only the points of difference are described. In this preferred embodiment, the planetary gear sets are constructed in the following way: A first planetary gear set M1 has, as speed change elements, a first ring gear R1 drive-connected to an output shaft 15, a first carrier C1 rotatably supporting a first pinion gear P1 meshing with the first ring gear R1, and a first sun gear S1 meshing with the first pinion gear P1; a second planetary gear set M2 has, as speed change elements, a second carrier C2 drive-connected to the first carrier C1 and rotatably supporting a second pinion gear P2 which has a smaller diameter than the first pinion gear P1 and is connected to the first pinion gear P1 non-rotatably relative thereto, a second sun gear S2 meshing with the second pinion gear P2; and a third planetary gear set M3 has, as speed change elements, a third carrier C3 connected to the first carrier C1 and rotatably supporting a third pinion gear P3 connected to the first pinion gear P1 non-rotatably relative thereto and meshing with a second ring gear R3 and a fourth pinion gear P4 meshing with the third pinion gear P3, and a third sun gear S3 meshing with the fourth pinion gear P4.

The plurality of clutches, in this example, is made up of a first clutch (C-2) for selectively drive-connecting the first carrier C1 to the input shaft 14 and a second clutch (C-1) for selectively drive-connecting the first sun gear S1 to the input shaft 14.

The plurality of brakes is made up of a first brake (B-0_{L}) for selectively stopping the first sun gear S1, a second brake (B-0_{H}) for selectively stopping the second sun gear S2 and a third brake (B-1) for selectively stopping the third sun gear S3, and a brake (B-2) only for achieving reverse is also provided.

The relationships between the engagement and the release of the clutches and the brakes and the achieved gears when this construction is employed are, as shown in the operation table of Fig. 6, exactly the same as in the case of the first preferred embodiment. Accordingly, explaining only the power transmission between the speed change elements, in the first speed, the input of the sun gear S1 becomes the output of the second ring gear R3 as a result of rotation of the mutually meshing pinion gears P1, P4 having the sun gear S3 as a reaction element; in the second speed, the input of the carrier C3 becomes the output of the second ring gear R3 as a result of rotation of the mutually meshing pinion gears P1, P4 having the sun gear S3 as a reaction element; and in the third speed, the simultaneous input to the sun gear S1 and the carrier C3 makes the first planetary gear set M1 direct-coupled and this input becomes the output of the ring gear R3 without being changed.

In the fourth speed, which is an overdrive speed, with respect to carrier C3 input, the sun gear S1 becomes a reaction element, and rotation increased in speed by an amount corresponding to autorotation of the pinion gear P1 is outputted to the ring gear R3. In the fifth speed, similarly with respect to carrier C3 input, the sun gear S2 becomes a reaction element, and rotation further increased in speed by an amount corresponding to autorotation of the pinion gear P2 is outputted to the ring gear R3. The effects obtained in this case are the same as in the case of the first preferred embodiment.

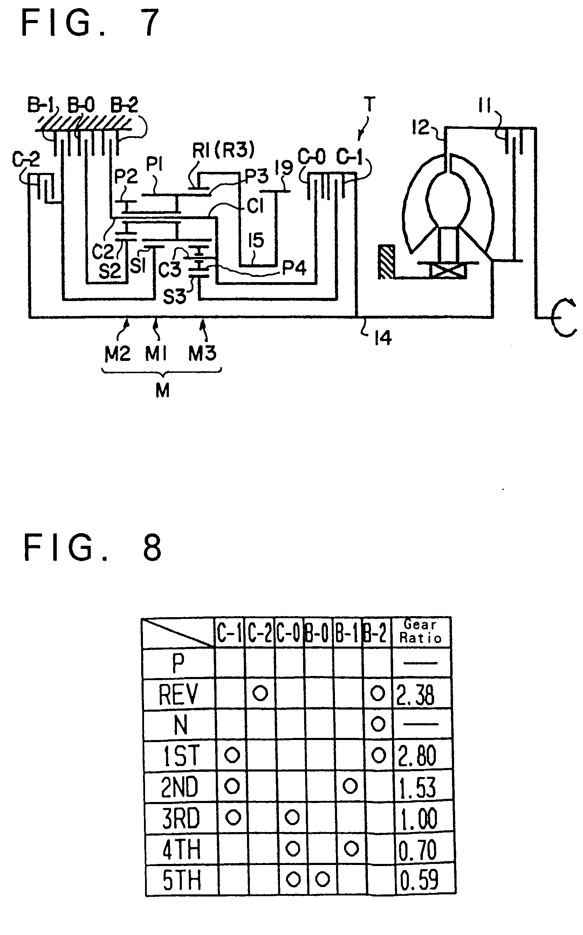

Finally, Fig. 7 is a skeleton of a fourth preferred embodiment of the invention. This example is one wherein a 5-speed transmission is made by adding a stepped pinion gear to a 4-speed transmission comprising a gear train the same as that of the third preferred embodiment but, differently from the third preferred embodiment, provided with three clutches and three brakes.

In this fourth preferred embodiment also, only the points of difference will be described. In this preferred embodiment, the plurality of clutches is made up of a first clutch (C-0) for selectively drive-connecting the first carrier C1 to the input shaft 14 and a second clutch (C-1) for selectively drive-connecting the third sun gear S3 to the input shaft 14, and besides this a clutch (C-2) only for achieving reverse gear (REV) is also provided.

The plurality of brakes is made up of a first brake (B-1) for selectively stopping the first sun gear S1, a second brake (B-0) for selectively stopping the second sun gear S2 and a third brake (B-2) for selectively stopping the second carrier C2.

The relationships between the engagement and the release of the clutches and the brakes and the achieved gears when this construction is employed are as shown in the operation table of Fig. 8. The first speed (1ST) is achieved by engagement of the clutch (C-1) and the brake (B-2). At this time, rotation of the input shaft 14 is transmitted to the sun gear S3 via the clutch (C-1) and is outputted as rotation of the ring gear R1 (R3) most decreased in speed by the braking of the carriers C1, C3 by the engagement of the brake (B-2). The second speed (2ND) is achieved by engagement of the clutch (C-1) and the brake (B-1), and with respect to input from the clutch (C-1) to the sun gear S3, rotation of the ring gear R1 (R3) having as a reaction element the sun gear S1 braked by the engagement of the brake (B-1) is outputted. The third speed (3RD) is achieved by direct coupling of the third planetary gear set M3 by engagement of both of the clutches (C-0, C-1), and rotation of the input shaft 14 is outputted to the output gear 19 unchanged as rotation of the ring gear R1 (R3).

The overdrive fourth speed (4TH) is achieved by engagement of the clutch (C-0) and engagement of the brake (B-1) which brakes the sun gear S1, and rotation of the input shaft 14 is outputted as rotation of the ring gear R1 (R3) increased in speed with respect to rotation of the first carrier C1 by an amount corresponding to autorotation of the pinion gear P1. Top gear, i.e. the fifth speed (5TH), which pertains to the main subject of this invention, is achieved by engagement of the clutch (C-0) and engagement of the brake (B-0), whereupon rotation of the input shaft 14 is outputted as rotation of the ring gear R1 (R3) further increased in speed with respect to rotation of the carrier C1 by an amount corresponding to autorotation of the small-diameter pinion gear P2 taking a reaction from the sun gear S2, which is of larger diameter than the first sun gear S1 used to achieve the fourth speed. At this time also, as in the previous preferred embodiments, meshing occurs in two locations, namely between the second sun gear S2 and the pinion gear P2 and between the pinion gear P1 and the ring gear R1 (R3), and top gear is achieved with one planetary gear set's worth of meshing. The reverse gear (REV) in this example is achieved by engagement of the clutch (C-2) and the brake (B-2), and rotation of the ring gear R1 (R3) rotating in reverse and decreased in speed with respect to the carrier C1 as a result of the braking of the sun gear S2 is outputted. In this way, in this example also, the same effects as in the first preferred embodiment are obtained.

In all the preferred embodiments described above, a 4-speed automatic transmission of which the fourth speed (4TH) is an overdrive gear is made 5-speed by making a first pinion gear P1 for the overdrive gear a stepped pinion gear by adding to it a second pinion gear P2 of smaller diameter and adding a sun gear S2 and brakes (B-0, B-0_{H}). When this construction is adopted, because the gear ratios of the underdrive gear side do not change, the reaction elements do not become large, and because the ring gear R1 is common and the carriers C1, C2 are integral the transmission is compact and furthermore the gear efficiency of the fifth speed (5TH) is good because the amount of meshing is the same as in an ordinary overdrive.

The invention has been described in detail above on the basis of four specific preferred embodiments; however, the invention is not limited to the preferred embodiments described above, and various changes to these embodiments can be made within the scope of the invention as set forth in the claims below.

## Claims

1. An automatic transmission for a vehicle having an input shaft, an output shaft and a speed changer for achieving five forward gears comprising first and second speeds which decrease in speed and transmit to the output shaft rotation from the input shaft, a third speed which transmits unchanged to the output shaft rotation from the input shaft, and fourth and fifth speeds which accelerate and transmit to the output shaft rotation from the input shaft, wherein:
the speed changer comprises connected first, second and third planetary gear sets, a plurality of clutches for connecting the input shaft to predetermined speed change elements of the first, second and third planetary gear sets, and a plurality of brakes for stopping predetermined speed change elements of the first, second and third planetary gear sets;
the first planetary gear set comprises, as speed change elements, a first ring gear drive-connected to the output shaft, a first carrier rotatably supporting a first pinion gear meshing with the first ring gear, and a first sun gear meshing with the first pinion gear; characterized in that:
the second planetary gear set comprises, as speed change elements, a second carrier drive-connected to the first carrier and rotatably supporting a second pinion gear having a smaller diameter than the first pinion gear and connected to the first pinion gear non-rotatably relative thereto, and a second sun gear meshing with the second pinion gear;
the plurality of clutches includes a first clutch for selectively drive-connecting the first carrier to the input shaft; and
the plurality of brakes includes a first brake for selectively stopping the first sun gear and a second brake for selectively stopping the second sun gear.

2. An automatic transmission for a vehicle according to claim 1 wherein:
the third planetary gear set comprises, as speed change elements, a second ring gear drive-connected to the first carrier, a third carrier drive-connected to the first ring gear and rotatably supporting a third pinion gear meshing with the second ring gear, and a third sun gear meshing with the third pinion gear;
the plurality of clutches includes a second clutch for selectively drive-connecting the first sun gear to the input shaft; and
the plurality of brakes includes a third brake for selectively stopping the third sun gear.

3. An automatic transmission for a vehicle according to claim 1 wherein:
the third planetary gear set comprises, as speed change elements, a second ring gear drive-connected to the first carrier, a third carrier drive-connected to the first ring gear and rotatably supporting a third pinion gear meshing with the second ring gear, and a third sun gear meshing with the third pinion gear;
the plurality of clutches includes a second clutch for selectively drive-connecting the third sun gear to the input shaft; and
the plurality of brakes includes a third brake for selectively stopping the second ring gear.

4. An automatic transmission for a vehicle according to claim 1 wherein:
the third planetary gear set comprises, as speed change elements, a second ring gear formed integrally with-the first ring gear, a third carrier connected to the first carrier and rotatably supporting a third pinion gear connected to the first pinion gear non-rotatably relative thereto and meshing with the second ring gear, and a fourth pinion gear meshing with the third pinion gear, and a third sun gear meshing with the fourth pinion gear;
the plurality of clutches includes a second clutch for selectively drive-connecting the first sun gear to the input shaft; and
the plurality of brakes includes a third brake for selectively stopping the third sun gear.

5. An automatic transmission for a vehicle according to claim 1 wherein:
the third planetary gear set comprises, as speed change elements, a second ring gear formed integrally with the first ring gear, a third carrier connected to the first carrier and rotatably supporting a third pinion gear connected to the first pinion gear non-rotatably relative thereto and meshing with the second ring gear, and a fourth pinion gear meshing with the third pinion gear, and a third sun gear meshing with the fourth pinion gear;
the plurality of clutches includes a second clutch for selectively drive-connecting the third sun gear to the input shaft; and
the plurality of brakes includes a third brake for selectively stopping the third carrier.

6. An automatic transmission for a vehicle according to any of claims 1 to 5 wherein:
the input shaft is disposed coaxially with an engine and drive-connected to the engine;
the first, second and third planetary gear sets are disposed in the order of from the engine side the third, the first and the second planetary gear set; and
an output gear for outputting rotation to the vehicle wheels side is provided on the output shaft between the engine and the third planetary gear set.

## Patentansprüche

1. Automatisches Getriebe für ein Fahrzeug mit einer Eingangswelle, einer Ausgangswelle und einer Gangwechselvorrichtung für fünf Vorwärtsgänge mit einem ersten und einem zweiten Gang, die eine Umdrehung von der Eingangswelle in ihrer Geschwindigkeit vermindern und sie
zur Ausgangswelle übertragen, einem dritten Gang, der eine Umdrehung von der Eingangswelle unverändert an die Ausgangswelle abgibt, und vierten und fünften Gängen, die eine Umdrehung von der Eingangswelle beschleunigen und an die Ausgangswelle übertragen, wobei:
die Gangwechselvorrichtung aufweist: miteinander verbundene erste, zweite und dritte Planetengetriebesätze, mehrere Kupplungen zum Verbinden der Eingangswelle mit vorbestimmten Gangwechselelementen der ersten, zweiten und dritten Planetengetriebesätze, und mehrere Bremsen zum Anhalten vorbestimmter Gangwechselelemente der ersten, zweiten und dritten Planetengetriebesätze;
der erste Planetengetriebesatz als Gangwechselelemente aufweist: ein erstes Hohlrad, das mit der Ausgangswelle antriebsverbunden ist, einen ersten Träger, der ein erstes Planetenrad drehbar hält, das mit dem ersten Hohlrad ineinandergreift, und ein erstes Sonnenrad, das mit dem ersten Planetenrad ineinandergreift; dadurch gekennzeichnet, daß der zweite Planetengetriebesatz als Gangwechselelemente aufweist: einen zweiten Träger, der mit dem ersten Träger antriebsverbunden ist und ein zweites Planetenrad drehbar hält, das einen kleineren Durchmesser als das erste Planetenrad aufweist und mit dem ersten Planetenrad relativ dazu nicht drehbar verbunden ist, und ein zweites Sonnenrad, das mit dem zweiten Planetenrad ineinandergreift;
die mehreren Kupplungen eine erste Kupplung aufweisen, um selektiv den ersten Träger mit der Eingangswelle antriebszuverbinden; und
die mehreren Bremsen eine erste Bremse, um selektiv das erste Sonnenrad anzuhalten, und eine zweite Bremse, um selektiv das zweite Sonnenrad anzuhalten, aufweisen.

2. Automatisches Getriebe für ein Fahrzeug nach Anspruch 1, wobei:
der dritte Planetengetriebesatz als Gangwechselelemente aufweist: ein zweites Hohlrad, das mit dem ersten Träger antriebsverbunden ist, einen dritten Träger, der mit dem ersten Hohlrad antriebsverbunden ist und ein drittes Planetenrad drehbar hält, das mit dem zweiten Hohlrad ineinandergreift, und ein drittes Sonnenrad, das mit dem dritten Planetenrad ineinandergreift;
die mehreren Kupplungen eine zweite Kupplung aufweisen, um selektiv das erste Sonnenrad mit der Eingangswelle antriebszuverbinden; und
die mehreren Bremsen eine dritte Bremse aufweisen, um selektiv das dritte Sonnenrad anzuhalten.

3. Automatisches Getriebe für ein Fahrzeug nach Anspruch 1, wobei:
der dritte Planetengetriebesatz als Gangwechselelemente aufweist: ein zweites Hohlrad, das mit dem ersten Träger antriebsverbunden ist, einen dritten Träger, der mit dem ersten Hohlrad antriebsverbunden ist und ein drittes Planetenrad drehbar hält, das mit dem zweiten Hohlrad ineinandergreift, und ein drittes Sonnenrad, das mit dem dritten Planetenrad ineinandergreift;
die mehreren Kupplungen eine zweite Kupplung aufweisen, um selektiv das dritte Sonnenrad mit der Eingangswelle antriebszuverbinden; und
die mehreren Bremsen eine dritte Bremse aufweisen, um selektiv das zweite Hohlrad anzuhalten.

4. Automatisches Getriebe für ein Fahrzeug nach Anspruch 1 wobei:
der dritte Planetengetriebesatz als Gangwechselelemente aufweist: ein zweites Hohlrad, das integral mit dem ersten Hohlrad ausgebildet ist, einen dritten Träger, der mit dem ersten Träger verbunden ist und ein drittes Planetenrad drehbar hält, das mit dem ersten Planetenrad relativ dazu nicht drehbar verbunden ist und mit dem zweiten Hohlrad ineinandergreift, und ein viertes Planetenrad, das mit dem dritten Planetenrad ineinandergreift, und ein drittes Sonnenrad, das mit dem vierten Planetenrad ineinandergreift;
die mehreren Kupplungen eine zweite Kupplung aufweisen, um selektiv das erste Sonnenrad mit der Eingangswelle antriebszuverbinden; und
die mehreren Bremsen eine dritte Bremse aufweisen, um selektiv das dritte Sonnenrad anzuhalten.

5. Automatisches Getriebe für ein Fahrzeug nach Anspruch 1, wobei:
der dritte Planetengetriebesatz als Gangwechselelemente aufweist: ein zweites Hohlrad, das integral mit dem ersten Hohlrad ausgebildet ist, einen dritten Träger, der mit dem ersten Träger verbunden ist und ein drittes Planetenrad drehbar hält, das mit dem ersten Planetenrad relativ dazu nicht drehbar verbunden ist und mit dem zweiten Hohlrad ineinandergreift, und ein viertes Planetenrad, das mit dem dritten Planetenrad ineinandergreift, und ein drittes Sonnenrad, das mit dem vierten Planetenrad ineinandergreift;
die mehreren Kupplungen eine zweite Kupplung aufweisen, um selektiv das dritte Sonnenrad mit der Eingangswelle antriebszuverbinden; und
und die mehreren Bremsen eine dritte Bremse aufweisen, um selektiv den dritten Träger anzuhalten.

6. Automatisches Getriebe für ein Fahrzeug nach einem der Ansprüche 1 bis 5, wobei:
die Eingangswelle koaxial zu einem Motor angeordnet und mit dem Motor antriebsverbunden ist;
die ersten, zweiten und dritte Planetengetriebesätze von der Motorseite in der Reihenfolge dritter, erster und zweiter Planetengetriebesatz angeordnet sind;
und ein Ausgangszahnrad zum Abgeben einer Umdrehung an die Fahrzeugräderseite an der Ausgangswelle zwischen dem Motor und dem dritten Planetengetriebesatz vorgesehen ist.

## Revendications

1. Transmission automatique pour un véhicule comportant un arbre d'entrée, un arbre de sortie et un variateur de vitesse pour obtenir cinq marches avant comprenant des première et deuxième vitesses qui procurent une décélération et sont transmises à la rotation de l'arbre de sortie à partir de l'arbre d'entrée, une troisième vitesse qui est transmise à l'état inchangé à la rotation de l'arbre de sortie à partir de l'arbre d'entrée et des quatrième et cinquième vitesses qui procurent un accélération et qui sont transmises à la rotation de l'arbre de sortie à partir de l'arbre d'entrée dans laquelle:
le variateur de vitesse comprend des premier, deuxième et troisième groupes connectés d'engrenages planétaires, plusieurs embrayages pour connecter l'arbre d'entrée à des éléments de variation de vitesse prédéterminée des premier, deuxième et troisième groupes d'engrenages planétaires, et plusieurs freins pour stopper les éléments de variation de vitesse prédéterminée des premier, deuxième et troisième groupes d'engrenages planétaires;
le premier groupe d'engrenage planétaire comprend, à titre d'éléments de variation de vitesse, une première couronne de train planétaire reliée en entraînement à l'arbre de sortie, un premier support supportant en rotation un premier pignon satellite s'engrenant avec la première couronne de train planétaire et une première roue solaire s'engrenant avec le premier pignon satellite; caractérisée en ce que :
le deuxième groupe d'engrenage planétaire comprend, à titre d'éléments de variation de vitesse, un deuxième support relié en entraînement au premier support et supportant en rotation un deuxième pignon satellite dont le diamètre est inférieur à celui du premier pignon satellite et qui est relié au premier pignon satellite en antirotation, ainsi qu'une deuxième roue solaire s'engrenant avec le deuxième pignon satellite;
la multitude d'embrayages englobent un premier embrayage pour relier en entraînement de manière sélective le premier support à la roue d'entrée; et
la multitude de freins englobent un premier frein pour stopper de manière sélective la première roue solaire et un deuxième frein pour stopper de manière sélective la deuxième roue solaire.

2. Transmission automatique pour un véhicule selon la revendication 1, dans laquelle:
le troisième groupe d'engrenage planétaire comprend, à titre d'éléments de variation de vitesse, une deuxième couronne de train planétaire reliée en entraînement au premier support, un troisième support relié en entraînement à la première couronne de train planétaire et supportant en rotation un troisième pignon satellite s'engrenant avec la deuxième couronne de train planétaire, et une troisième roue solaire s'engrenant avec le troisième pignon satellite;
la multitude d'embrayages englobent un deuxième embrayage pour relier en entraînement de manière sélective la première roue solaire à l'arbre d'entrée; et
la multitude de freins englobent un troisième frein pour stopper de manière sélective la troisième roue solaire.

3. Transmission automatique pour un véhicule selon la revendication 1, dans laquelle:
le troisième groupe d'engrenage planétaire comprend, à titre d'éléments de variation de vitesse, une deuxième couronne de train planétaire reliée en entraînement au premier support, un troisième support relié en entraînement à la première couronne de train planétaire et supportant en rotation un troisième pignon satellite s'engrenant avec la deuxième couronne de train planétaire, et une troisième roue solaire s'engrenant avec le troisième pignon satellite;
la multitude d'embrayages englobent un deuxième embrayage pour relier en entraînement de manière sélective la troisième roue solaire à l'arbre d'entrée; et
la multitude de freins englobent un troisième frein pour stopper de manière sélective la deuxième couronne de train planétaire.

4. Transmission automatique pour un véhicule selon une revendication 1, dans laquelle:
le troisième groupe d'engrenage planétaire comprend, à titre d'éléments de variation de vitesse, une deuxième couronne de train planétaire faisant partie intégrale de la première couronne de train planétaire, un troisième support relié au premier support et supportant en rotation un troisième pignon satellite relié en antirotation au premier pignon satellite et s'engrenant avec la deuxième couronne de train planétaire, et un quatrième pignon satellite s'engrenant avec le troisième pignon satellite, et une troisième roue solaire s'engrenant avec le quatrième pignon satellite;
la multitude d'embrayages englobent un deuxième embrayage pour relier en entraînement de manière sélective la première roue solaire à l'arbre d'entrée; et
la multitude de freins englobent un troisième frein pour stopper de manière sélective la troisième roue solaire.

5. Transmission automatique pour un véhicule selon la revendication 1, dans laquelle:
le troisième groupe d'engrenage planétaire comprend, à titre d'éléments de variation de vitesse, une deuxième couronne de train planétaire faisant partie intégrale de la première couronne de train planétaire, un troisième support relié en entraînement au premier support et supportant en rotation un troisième pignon satellite relié en antirotation au premier pignon satellite et s'engrenant avec la deuxième couronne de train planétaire, et un quatrième pignon satellite s'engrenant avec le troisième pignon satellite, et une troisième roue solaire s'engrenant avec le quatrième pignon satellite;
la multitude d'embrayages englobent un deuxième embrayage pour relier en entraînement de manière sélective la troisième roue solaire à l'arbre d'entrée; et
la multitude de freins englobent un troisième frein pour stopper de manière sélective le troisième support.

6. Transmission automatique pour un véhicule selon l'une quelconque des revendications 1 à 5, dans laquelle:
l'arbre d'entrée est disposé en position coaxiale avec une moteur et est relié en entraînement au moteur;
les premier, deuxième et troisième groupes d'engrenages planétaires sont disposés dans l'ordre suivant à partir du côté moteur: le troisième, le premier et le deuxième groupes d'engrenages planétaires; et
un engrenage de sortie pour transmettre la rotation au côté roues du véhicule est prévu sur l'arbre de sortie entre le moteur et le troisième groupe d'engrenage planétaire.
